# EUROPEAN PATENT SPECIFICATION

(11) **EP 1 193 607 B1**
(45) Date of publication and mention of the grant of the patent: **30.03.2005**
(21) Application number: 01000502.3
(22) Date of filing: 26.09.2001
(51) Int. Cl.: G06F 13/28

(54) **Apparatus and method for the exchange of signal groups between a plurality of components in a digital signal processor having a direct memory access controller**
Gerät und Verfahren zum Signalgruppenaustausch zwischen mehreren Teilen in einer Einrichtung zur digitalen Signalverarbeitung der eine Direktspeicherzugriffssteuerung enthält
Dispositif et méthode pour l'échange de groupes de signaux entre plusieurs composants d'un processeur de traitement numérique de données comprenant un contrôleur d'accès direct à la mémoire

(30) Priority: 27.09.2000 US 670666
(43) Date of publication of application: 03.04.2002
(73) Proprietor: Texas Instruments Incorporated, Dallas, Texas 75251 (US)
(72) Inventor: Smith, Patrick J., Houston, TX 77027 (US); Jones, Jason A., Houston, TX 77057 (US); McGonagle, Kevin A., Sugarland, TX 77479 (US); Nguyen, Tai H., Houston, TX 77082 (US)
(74) Representative: Holt, Michael

(56) References cited:
- EP-A- 0 486 145
- EP-A- 0 901 081
- US-A- 5 535 417
- US-A- 5 685 005

## Description

This invention relates generally to the data processing apparatus and, more particularly, to the specialized high performance processor units generally referred to as digital signal processing units. The invention relates to the transfer of signal groups between the various components of the digital signal processor.

### BACKGROUND OF THE INVENTION

Digital signal processing units have been developed as specialized data processing units. These units are optimized to perform routine, albeit complex, operations with great efficiency. For many applications, the computations need to done in as close to real time as possible. In order to achieve the computational speed required of the digital signal, the digital signal processing units are optimized to perform the specified processing operation(s) with great efficiency. In addition, many of the functions that would be performed by a general purpose processing unit are eliminated or the funtionality performed outside of the core processing unit.

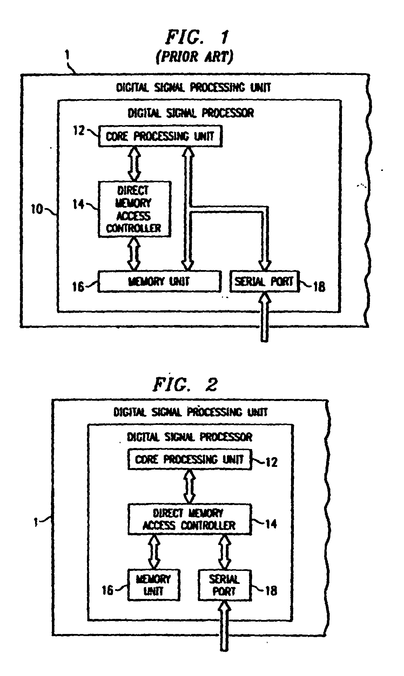

Referring to Fig. 1, a digital signal processing unit 1, according to the prior art, is shown. A first digital signal processor 10 includes a core processing unit 12 (frequently referred to as a processing core), a direct memory access unit 14, a memory unit or memory units 16, and a serial port or serial ports 18. The memory unit 16 stores the signal groups that are to be processed or that assist in the processing of the signal groups to be processed by the core processing unit 12. The core processing unit 12 performs the bulk of the processing of signal groups in the memory unit 12. The direct memory access unit 14 is coupled to the core processing unit 12 and to memory unit 16 and mediates the signal group exchange therebetween. The serial port 18 exchanges signal groups with components external to the digital signal processing unit 1. The core processing unit 12 is coupled to the serial port 18 and to the memory unit 16 and controls the exchange of signal groups between these components.

Further examples of processing units and DMA Controllers one to be found in US Patent 5,535,417, and European Patent Applications EP0486145 and EP0901081.

The digital signal processor is typically designed and implemented to have limited functionality, but functions that must be repeated and performed rapidly. The fast Fourier transform (FFT) calculation and the Viterbi algorithm decoding are two examples where digital signal processors have been utilized with great advantage. To insure that the digital signal processors operate with high efficiency, the core processing is generally optimized for the performance of limited processing functions. Part of the optimization process involves the off-loading, to the extent possible, any processing not directed toward the optimized function. The exchange of signal groups involving the core processing unit and the memory unit has been assigned to the direct memory access unit.

The digital signal processor has assumed greater processing responsibilities. Not only does the need for speed remain undiminished, but a simultaneously, the requirements to exchange signal groups with a wider variety of external apparatus have arisen. For example, in a digital signal processing unit having multiple digital signal processors, it is frequently necessary to communicate between the digital signal processors that are part of the same digital signal processing unit. While this communication can be performed through the serial port, this mode of operation has proven cumbersome and slow. Similarly, a host microcontroller requiring the exchange signal groups with the digital signal processor can similarly use the serial port to communicate with a digital signal processor at the expense of operational efficiency. In addition, the addressing modes that are implemented both in the memory unit (e.g., the circular buffer mode) and in the serial port (e.g., the sorting mode) have become increasingly complex. All of this increasing computational complexity has the potential to undermine the performance of the microcontroller.

A need has therefore been felt for apparatus and an associated method having the feature that the transfer of signal groups between components of a digital signal processor is accomplished without the active participation of, but under the control of the core processing unit. It would be another feature of the apparatus and method to place the control of the transfer of signal groups in the digital signal processor in the direct memory access controller. It would be still another feature of the apparatus and associated method to have flexibility in coupling the source and destination components involved in the transfer of signal groups. It would be yet another feature of the apparatus and associated method to prioritize and to prevent conflicts in the transfer of signal groups within the digital signal processing unit. It would be still further feature of the apparatus and associated method to permit the transfer of signal groups with components external to the digital signal processor. It would still another feature of the apparatus and associated method to provide flexibility in the addressing modes available to the direct memory access controller.

### SUMMARY OF THE INVENTION

The invention provides a direct memory access controller, digital signal processing unit and a method as set forth in the claims.

### BRIEF DESCRIPTION OF THE DRAWINGS

For a more complete understanding of the present invention, and the advantages thereof, reference is now made to the following detailed description of certain particular and illustrative embodiments and the features and aspects thereof, by way of example only, and with reference to the figures of the accompanying drawings in which:
Figure 1 is a block diagram of a digital signal processing unit according to the prior art.
Fig. 2 is a block diagram of a more recent embodiment of a digital signal processing unit.
Figure 3 is a block diagram of a preferred embodiment of a digital signal processor according to the present invention.
Figure 4 is a block diagram of a direct memory access controller capable of advantageously using the present invention.
Figure 5 illustrates the operation of the channels according to the present invention.

The use of the same reference symbols in different drawings indicates similar or identical items.

### DETAILED DESCRIPTION OF THE FIGURES

Fig. 1 has been discussed with respect to the to the prior art.

The first step in relieving processing responsibility is to transfer the responsibility for the exchange of signals between the memory unit and serial port to the direct memory access controller. Referring to Fig. 2, the digital signal processor 20 has a core processing unit 12, a direct memory access controller, a memory unit 16, and a serial port 18, the same components as in the prior art digital signal processors shown in Fig. 1. The difference between the embodiments in Fig. 1 and Fig 2 is as follows. In Fig. 1, the direct memory access controller 14, control the exchange of signal groups between the memory unit 16, and the core processing unit 12. In Fig. 2, the direct memory access controller 24 controls not only the exchange of signal groups between the memory unit 16, and the core processing unit 12, but also controls the exchange of signal groups between the serial port 18, the host processor interface unit 25, and the processor to processor interface unit 23. With this implementation, the core processing unit 12 is relieved of processing responsibilities for the serial port as shown in Fig. 1, as compared to the implementation shown in Fig. 1. Because of the large number of possible addressing modes, i.e., frame mode, circular buffer mode and sorting mode, this transfer of the responsibilities for controlling the exchange of signal groups between the serial port and the memory unit can be significant.

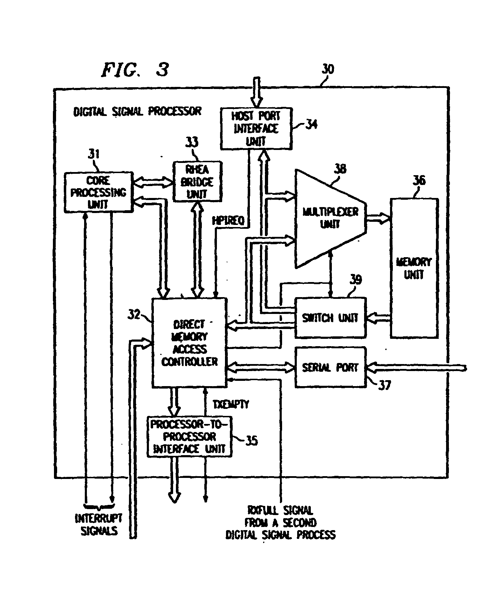

Referring next to Fig. 3, a block diagram of a digital signal processor 30, according to the preferred embodiment of the invention, is shown. The core processing unit 31 performs the principal processing functions of digital signal processor 30. The core processing unit 31 is generally optimized in both hardware and in software to perform a limited number of processing functions extremely efficiently. The memory unit 36 stores the signal groups that the core processing unit requires for the processing functions. The serial port 37 exchanges signal groups with components outside of the digital signal processing unit. The rhea bridge unit 33 provides an interface between a memory-mapped register bank in the core processing unit 31 and control (context) registers in the direct memory access controller 32. The host port interface unit 34 exchanges signal groups with external components, typically a microcontroller. The direct memory access controller 36 exchanges signal with the serial port 37. The direct memory access controller 36 applies signal groups to multiplexer 38 and receives signals from switch 37. The host port interface unit 34 applies signals to the multiplexer unit 38 and receives signal groups from the switch unit 39. The switch unit 39 and the multiplexer unit 38 receive control signals from the direct memory access controller 32. The direct memory access controller 32 receives a HPIREQ signal from the host port interface unit 34. The processor to processor interface unit 35 permits the transfer of signal groups between digital signal processors that are fabricated as part of the digital signal processing unit. The processor-to-processor interface unit 35 applies an TXEMPTY signal to the direct memory interface controller 32 in the same digital signal processor as the direct memory access controller 32. In response, the direct memory access controller 32 applies the requested signal groups to the processor-to-processor interface unit 35, the signal groups having been previously stored in the memory unit 36. The processor-to-processor interface unit 35 transmits a RXFULL signal to the direct memory access unit 35' of the digital signal processor that has requested the signal group(s). The direct memory access unit 35 of digital signal processor 30 receives a TXFULL signal from the processor-to-processor interface unit 35' of the other digital signal processor. In response to this TXFULL signal, the signal group stored in the processor-to processor interface unit 35' is transferred through the direct memory access controller 32 to the memory unit 36. The digital signal processor to digital signal processor transfer of signal groups is initiated by an interrupt signal applied by the requesting digital signal processing unit to the core processing unit of the digital signal processor storing the requested signal group.

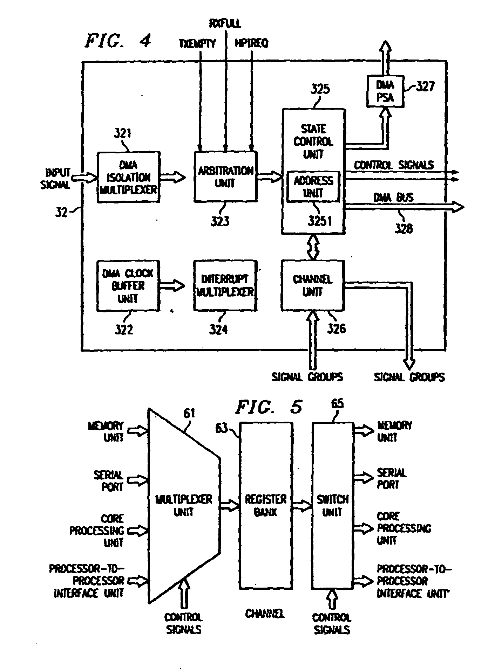

Referring to Fig. 4, a block diagram of a direct memory access controller 32 according to the preferred embodiment of the present invention is shown. The direct memory access controller 32 includes dma isolation multiplexer 321, a clock buffer unit 322, an arbitration unit 323, an interrupt multiplex unit 324, a state control unit 325, and a psa unit 326. The dma isolation multiplexer 321 includes the logic components to isolate the input signals to the direct memory access controller 32 and is used for testing purposes. The clock buffer unit 322 contains logic to correct for the skew of the external (i.e. to the digital signal processor) clock signal. The clock signal is then distributed throughout the direct memory access unit 32. The interrupt multiplexer unit 324 provides synchronous interrupts to the core processing unit of the digital signal processor 30. The arbitration unit 323 includes apparatus responsive to bids for control of one of the channels to select user of the channel. The psa unit 326 is a calculator for testing and for debugging the direct memory access unit 32. The state control unit 325 selects the state (configuration) of the direct memory access controller and applies the control signals that implement the machine configuration. The state control unit 325 receives signals from the arbitration unit 323 that determines the state of the direct memory access controller 323 during the transfer of signal groups. The arbitration unit receives the TXEMPTY signal the RXFULL signal and the HPIREQ signal. These signals are compared with competing requests for control for transfer of the signal groups through the direct memory access controller 32 according to a preselected priority list and the results communicated to the state control unit for appropriate generation of control signals. Referring to the channel 326, the transferred signal groups are shown as separate from the dma bus. This separation is shown in order to explain the operation of the channel unit 326. The dma bus 328 carries not only control signal groups and address signal groups, but also the signal groups that are being exchanged between components of the digital signal processing unit 30.

Referring to Fig. 5, the operation of the channel units 349 of the direct memory access unit is illustrated. The channel units 349 includes a plurality of channels of which one is channel is shown in Fig. 6. Multiplexer 61 have coupled to input terminals thereof all of the source components of signal groups. As shown in the Fig. 6. the source components include the memory unit 16, the serial port 18, the core processing unit 12, and the processor-to-processor interface unit 31'. Note that the input terminals are coupled to direct memory access unit 34' of the second digital signal processor 30'. Control signals from the dma bus 347 select the source component to be transmitted through multiplexer unit 61. The signal groups transmitted through the multiplexer unit 61 are applied to and stored in the register bank 63. The signal group stored in the register bank 63 is applied to the switch unit 65. Switch unit 65, in response to control signals from the dma bus 349, transmits the signal group and applies the signal group to one of the possible destination components, i.e., the memory unit 16, the serial port 18, the core processing unit 12 and to the interface unit 31 associated with the digital signal processor 30 in which the channel units 349 are located. In the preferred embodiment, although six programmable channels are only is active at any time. With respect to the host port interface unit 34, the signal groups are exchanged directly with the memory unit and are not transmitted through the channel unit 324.

As indicated previously, the direct memory access as assumed increased responsibility for the transfer of signal groups. While the core processing unit has the ultimate control of the transfer of the signal groups, the routine activity of the signal group transfer has been placed in the direct memory access controller. Originally, the direct memory access controller provided the interface between the core processing unit and the memory unit. In the preferred embodiment of the present invention, the direct memory access unit controller controls or is involved in nearly every signal group transfer. With respect to the exchange of signals between the serial port and the memory unit, addressing modes must be made available. These addressing modes, i.e., the frame mode, the circular buffer mode and the sorting mode, and the apparatus for implementing these addressing modes is described in the copending U.S. Patent Application entitled APPARATUS AND METHOD FOR ADDRESS MODIFICATION IN A DIRECT MEMORY ACCESS CONTROLLER, cited above. With respect to the host port interface unit, the channels in the direct memory access controller are not directly involved in the signal group transfer. However, the direct memory access controller provides the control signals to insure that the transfer of signal groups between host port processor and the memory unit do not conflict with other signal groups transfers in the digital signal processor. With respect to the processor-to-processor signal group transfers, these transfers are in fact implemented using the channel unit for the actual transfer. In all transfers, the arbitration unit is involved to the extent that the signal transfer with the highest priority is processed first. In one application of the present invention, the digital signal processing unit can operate under the overall control of a microcontroller. It is therefore important that communication with the microcontroller takes precedence over the other signal group transfers.

While the invention has been described with respect to the embodiments set forth above, the invention is not necessarily limited to these embodiments. Accordingly, other embodiments, variations, and improvements not described herein are not necessarily excluded from the scope of the invention, the scope of the invention being defined by the following claims.

## Claims

1. A method of transferring signal groups in a digital signal processing unit, the method comprising:
providing a digital signal processor (30) of the digital signal processing unit with a direct memory access controller (32) having a plurality of channels, each of said plurality of channels capable of intercoupling two digital signal processor components selected from the group consisting of a core processing unit (31), a memory unit (36), and a serial port (37) in response to control signal;
applying signals to an arbitration unit (323) requesting access to a channel coupling two selected components,
when the signal group transfer between two selected components has a higher priority than other pending requests, generating control signals coupling the two selected components; and
transferring signal groups between the two selected components.

2. A method as claimed in Claim 1 wherein said group includes a processor to processor interface (35).

3. The method as recited in claim 2, wherein the digital signal processing unit comprises two digital signal processors, each digital signal processor having an interface unit (35) for transferring signal groups from the memory unit (30) of a first digital signal processor to the memory unit of a second digital signal processing unit, the interface unit of the first digital signal processor and the interface unit of the second digital signal processor being coupled to the direct memory access controller of the other digital signal processor.

4. The method as recited in claim 1, Claim 2 or Claim 3, wherein the transferring step includes generating at least one of a source address and a destination address associated with the signal group being transferred through the channel.

5. The method as recited in claim 4, wherein the step of generating an address includes generating an address in a mode selected from the group consisting of a frame address mode, a circular buffer address mode and a sorting address mode.

6. A direct memory access controller (14, 32) for a digital signal processor (30) of a digital signal processing unit (1) **characterised in** comprising:
a plurality of channels each for coupling a selected two of the core processing unit (12, 31), the memory unit (16, 36), and the serial port (18, 37) in response to control signals;
an arbitration unit (323) responsive to channel requests for resolving conflicts, and for selecting the two units to be coupled; and
a state control unit (325) responsive to signals from the arbitration unit for generating the control signals.

7. The direct memory access controller as recited in claim 6, wherein the digital signal processing unit has two digital signal processors, each digital signal processor including an interface unit (35), the direct memory access controller channel units coupling to the interface unit in the digital signal processor unit in which the direct memory access controller is located and to the interface unit in the other digital signal processor in response to control signals.

8. The direct memory access controller as recited in claim 6 or Claim 7 further comprising:
an address unit (3251) for generating at least one of a source address and a destination address, the address unit providing addresses in one of a frame mode, a circular buffer mode, and a sorting mode.

9. The direct memory controller as recited in Claim 6, Claim 7 or Claim 8, wherein in response to a request to transfer signal between a host port interface unit (34) and the memory unit applied to the arbitration unit, the state control unit generates control signals preventing the direct memory access unit from transferring signal groups.

10. The direct memory access controller as recited in claim 9, wherein a signal group transfer between the host port interface unit and the memory unit has the highest signal transfer priority.

11. The direct memory access controller as recited in Claim 9 or Claim 10, wherein the host processor interface unit has signal groups from a microcontroller applied thereto, the microcontroller controlling the processing of the digital signal processor.

12. A digital signal processing unit having a digital signal processor comprising:
a core processing unit for processing signal groups applied thereto;
a memory unit for storing signal groups;
a serial port for exchanging signal groups with components external to the digital signal processing unit;
a host port interface unit for receiving signal groups from an external component; and
a direct memory access controller as claimed in any of Claims 6 to 11.

13. The digital signal processing unit as recited in claim 12 further comprising:
a second digital signal processor, the digital signal processor and the second digital signal processor including:
apparatus for the transfer of signal groups between the memory units of the digital signal processor and the second digital signal processor, wherein the direct memory access controllers of the digital signal processor and the second digital signal processor control the transfer of signal groups.

14. The digital signal processing unit as recited in Claim 13 and including:
a processor-to-processor interface unit (35) for exchanging signal groups with the digital signal processing unit and a second digital signal processing unit, the direct memory access unit (32) of the digital signal processing unit and the direct memory access unit (32) of the second digital signal processing unit (30) controlling the transfer of signal groups between the digital signal processor and the digital signal processor (30).

## Patentansprüche

1. Verfahren zum Übertragen von Signalgruppen in einer digitalen Signalverarbeitungseinheit, wobei das Verfahren umfasst:
Versehen eines digitalen Signalprozessors (30) der digitalen Signalverarbeitungseinheit mit einem Direktspeicherzugriff-Controller (32), der mehrere Kanäle besitzt, wobei jeder der mehreren Kanäle in Reaktion auf ein Steuersignal zwei digitale Signalprozessorkomponenten, die aus der Gruppe ausgewählt sind, die aus einer Kern-Verarbeitungseinheit (31), einer Speichereinheit (36) und einem seriellen Port (37) besteht, miteinander koppeln kann;
Eingeben von Signalen in eine Arbitrierungseinheit (323), die einen Zugriff auf einen Kanal, der zwei ausgewählte Komponenten koppelt, anfordert,
wobei dann, wenn die Signalgruppenübertragung zwischen zwei ausgewählten Komponenten eine höhere Priorität als andere anstehende Anforderungen hat, Steuersignale erzeugt werden, die die zwei ausgewählten Komponenten koppeln; und
Übertragen von Signalgruppen zwischen den zwei ausgewählten Komponenten.

2. Verfahren nach Anspruch 1, bei dem die Gruppe eine Prozessor-Prozessor-Schnittstelle (35) umfasst.

3. Verfahren nach Anspruch 2, bei dem die digitale Signalverarbeitungseinheit zwei digitale Signalprozessoren umfasst, wobei jeder digitale Signalprozessor eine Schnittstelleneinheit (35) für die Übertragung von Signalgruppen von der Speichereinheit (30) eines ersten digitalen Signalprozessors an die Speichereinheit einer zweiten digitalen Signalverarbeitungseinheit besitzt, wobei die Schnittstelleneinheit des ersten digitalen Signalprozessors und die Schnittstelleneinheit des zweiten digitalen Signalprozessors mit dem Direktspeicherzugriff-Controller des anderen digitalen Signalprozessors gekoppelt sind

4. Verfahren nach Anspruch 1, Anspruch 2 oder Anspruch 3, bei dem der Übertragungsschritt das Erzeugen wenigstens einer Quelladresse und einer Zieladresse, die der über den Kanal übertragenen Signalgruppe zugeordnet sind, umfasst.

5. Verfahren nach Anspruch 4, bei dem der Schritt des Erzeugens einer Adresse das Erzeugen einer Adresse in einer Betriebsart, die aus der Gruppe ausgewählt ist, die aus einer Rahmenadressenbetriebsart, einer Zirkulärpufferadressen-Betriebsart und einer Adressensortierungsbetriebsart besteht, umfasst.

6. Direktspeicherzugriff-Controller (14, 32) für einen digitalen Signalprozessor (30) einer digitalen Signalverarbeitungseinheit (1), **dadurch gekennzeichnet, dass** er umfasst:
mehrere Kanäle, wovon jeder dazu dient, in Reaktion auf Steuersignale ein ausgewähltes Paar aus Kernverarbeitungseinheit (12, 31), Speichereinheit (16, 36) und seriellem Port (18, 37) zu koppeln;
eine Arbitrierungseinheit (323), die in Reaktion auf Kanalanforderungen Konflikte auflöst und die zwei zu koppelnden Einheiten auswählt; und
eine Zustandssteuereinheit (325), die in Reaktion auf Signale von der Arbitrierungseinheit die Steuersignale erzeugt.

7. Direktspeicherzugriff-Controller nach Anspruch 6, bei der die digitale Signalverarbeitungseinheit zwei digitale Signalprozessoren besitzt, wobei jeder digitale Signalprozessor eine Schnittstelleneinheit (35) enthält, wobei die Direktspeicherzugriff-Controller-Kanaleinheiten mit der Schnittstelleneinheit in der digitalen Signalprozessoreinheit, in der sich der Direktspeicherzugriff-Controller befindet, und mit der Schnittstelleneinheit in dem anderen digitalen Signalprozessor in Reaktion auf Steuersignale gekoppelt werden.

8. Direktspeicherzugriff-Controller nach Anspruch 6 oder Anspruch 7, ferner mit:
einer Adresseneinheit (3251), die wenigstens eine Quelladresse und eine Zieladresse erzeugt, wobei die Adresseneinheit Adressen entweder in einer Rahmenbetriebsart oder in einer Zirkulärpufferbetriebsart oder in einer Sortierbetriebsart bereitstellt.

9. Direktspeicherzugriff-Controller nach Anspruch 6, Anspruch 7 oder Anspruch 8, bei dem in Reaktion auf eine Anforderung zum Übertragen von Signalen zwischen einer Host-Port-Schnittstelleneinheit (34) und der Speichereinheit, die in die Arbitrierungseinheit eingegeben wird, die Zustandssteuereinheit Steuersignale erzeugt, die die Direktspeicherzugriff-Einheit daran hindern, Signalgruppen zu übertragen.

10. Direktspeicherzugriff-Controller nach Anspruch 9, bei dem eine Signalgruppenübertragung zwischen der Host-Port-Schnittstelleneinheit und der Speichereinheit die höchste Signalübertragungspriorität besitzt.

11. Direktspeicherzugriff-Controller nach Anspruch 9 oder Anspruch 10, bei dem die Hostprozessor-Schnittstelleneinheit Signalgruppen, die von einem Mikrocontroller in sie eingegeben werden, besitzt, wobei der Mikrocontroller die Verarbeitung des digitalen Signalprozessors steuert.

12. Digitale Signalverarbeitungseinheit, die einen digitalen Signalprozessor besitzt, mit:
einer Kernverarbeitungseinheit zum Verarbeiten von in sie eingegebenen Signalgruppen;
einer Speichereinheit zum Speichern von Signalgruppen;
einem seriellen Port zum Austauschen von Signalgruppen mit Komponenten außerhalb der digitalen Signalverarbeitungseinheit;
einer Host-Port-Schnittstelleneinheit zum Empfangen von Signalgruppen von einer externen Komponente; und
einem Direktspeicherzugriff-Controller nach einem der Ansprüche 6 bis 11.

13. Digitale Signalverarbeitungseinheit nach Anspruch 12, die ferner umfasst:
einen zweiten digitalen Signalprozessor, wobei der digitale Signalprozessor und der zweite digitale Signalprozessor umfassen:
eine Vorrichtung für die Übertragung von Signalgruppen zwischen den Speichereinheiten des digitalen Signalprozessors und des zweiten digitalen Signalprozessors, wobei die Direktspeicherzugriff-Controller des digitalen Signalprozessors und des zweiten digitalen Signalprozessors die Übertragung von Signalgruppen steuern.

14. Digitale Signalverarbeitungseinheit nach Anspruch 13, mit: einer Prozessor-Prozessor-Schnittstelleneinheit (35) zum Austauschen von Signalgruppen mit der digitalen Signalverarbeitungseinheit und einer zweiten digitalen Signalverarbeitungseinheit, wobei die Direktspeicherzugriff-Einheit (32) der digitalen Signalverarbeitungseinheit und die Direktspeicherzugriff-Einheit (32) der zweiten digitalen Signalverarbeitungseinheit (30) die Übertragung von Signalgruppen zwischen dem digitalen Signalprozessor und dem digitalen Signalprozessor (30) steuern.

## Revendications

1. Procédé de transfert de groupes de signaux dans une unité de traitement numérique de signaux, le procédé comprenant :
la fourniture à un processeur numérique de signaux (30) de l'unité de traitement numérique de signaux, d'un contrôleur d'accès direct à la mémoire (32) possédant une pluralité de canaux, chacun de ladite pluralité de canaux étant capable d'interconnecter deux composants du processeur numérique de signaux sélectionnés dans le groupe composé d'une unité de traitement principale (31), d'une unité de mémoire (36), et d'un port série (37) en réponse à un signal de commande ;
l'application des signaux à une unité d'arbitrage (323) demandant un accès à un canal en couplant deux composants sélectionnés,
lorsque le transfert de groupe de signaux entre deux composants sélectionnés a une priorité plus élevée que d'autres demandes en instance, la production de signaux de commande couplant les deux composants sélectionnés ; et
le transfert des groupes de signaux entre les deux composants sélectionnés.

2. Procédé selon la revendication 1, dans lequel ledit groupe comprend une interface de processeur à processeur (35).

3. Procédé selon la revendication 2, dans lequel l'unité de traitement numérique de signaux comprend deux processeurs numériques de signaux, chaque processeur numérique de signaux possédant une unité d'interface (35) pour transférer des groupes de signaux à partir de l'unité de mémoire (30) d'un premier processeur numérique de signaux vers l'unité de mémoire d'une seconde unité de traitement numérique de signaux, l'unité d'interface du premier processeur numérique de signaux et l'unité d'interface du second processeur numérique de signaux étant reliées au contrôleur d'accès direct à la mémoire de l'autre processeur numérique de signaux.

4. Procédé selon l'une quelconque des revendications 1 à 3, dans lequel l'étape de transfert comprend la production d'au moins une adresse de source et une adresse de destination associées au groupe de signaux en cours de transfert par l'intermédiaire du canal.

5. Procédé selon la revendication 4, dans lequel l'étape consistant à produire une adresse comprend la production d'une adresse dans un mode sélectionné dans le groupe composé d'un mode d'adressage trame, d'un mode d'adressage tampon circulaire et d'un mode d'adressage tri.

6. Contrôleur d'accès direct à la mémoire (14, 32) pour un processeur numérique de signaux (30) d'une unité de traitement numérique de signaux (1), **caractérisé par le fait qu'**il comprend :
une pluralité de canaux, chacun d'eux couplant deux canaux sélectionnés de l'unité de traitement principale (12, 31), de l'unité de mémoire (16, 36), et du port série (18, 37) en réponse à des signaux de commande ;
une unité d'arbitrage (323) sensible à des demandes de canal afin de résoudre des conflits, et de sélectionner les deux unités à coupler ; et
une unité de commande d'état (325) sensible à des signaux provenant de l'unité d'arbitrage pour produire les signaux de commande.

7. Contrôleur d'accès direct à la mémoire selon la revendication 6, dans lequel l'unité de traitement numérique de signaux possède deux processeurs numériques de signaux, chaque processeur numérique de signaux comprenant une unité d'interface (35), les unités de canal de contrôleur d'accès direct à la mémoire étant couplées à l'unité d'interface de l'unité de processeur numérique de signaux dans laquelle le contrôleur d'accès direct à la mémoire est situé et à l'unité d'interface de l'autre processeur numérique de signaux en réponse aux signaux de commande.

8. Contrôleur d'accès direct à la mémoire selon l'une quelconque des revendications 6 ou 7 comprenant de plus :
une unité d'adressage (3251) pour produire au moins l'une d'une adresse de source et d'une adresse de destination, l'unité d'adressage fournissant des adresses dans l'un des mode trame, mode tampon circulaire et mode tri.

9. Contrôleur d'accès direct à la mémoire selon l'une quelconque des revendications 6 à 8, dans lequel, en réponse à une demande de transfert d'un signal entre une unité d'interface de port hôte (34) et l'unité de mémoire, appliquée à l'unité d'arbitrage, l'unité de commande d'état produit des signaux de commande empêchant l'unité d'accès direct à la mémoire de transférer des groupes de signaux.

10. Contrôleur d'accès direct à la mémoire selon la revendication 9, dans lequel un transfert de groupe de signaux entre l'unité d'interface de port hôte et l'unité de mémoire possède la priorité de transfert de signaux la plus élevée.

11. Contrôleur d'accès direct à la mémoire selon l'une quelconque des revendications 9 ou 10, dans lequel l'unité d'interface de processeur hôte possède des groupes de signaux provenant d'un microcontrôleur auquel ils sont appliqués, le microcontrôleur contrôlant le traitement du processeur numérique de signaux.

12. Unité de traitement numérique de signaux possédant un processeur numérique de signaux comprenant :
une unité de traitement principale pour traiter des groupes de signaux qui y sont appliqués ;
une unité de mémoire pour stocker des groupes de signaux ;
un port série pour échanger des groupes de signaux avec des composants extérieurs à l'unité de traitement numérique de signaux ;
une unité d'interface de port hôte pour recevoir des groupes de signaux provenant d'un composant extérieur ; et
un contrôleur d'accès direct à la mémoire selon l'une quelconque des revendications 6 à 11.

13. Unité de traitement numérique de signaux selon la revendication 12 comprenant de plus :
un second processeur numérique de signaux, le processeur numérique de signaux et le second processeur numérique de signaux comprenant :
un appareil pour transférer des groupes de signaux entre les unités de mémoire du processeur numérique de signaux et du second processeur numérique de signaux, dans lequel les contrôleurs d'accès direct à la mémoire du processeur numérique de signaux et du second processeur numérique de signaux, commandent le transfert des groupes de signaux.

14. Unité de traitement numérique de signaux selon la revendication 13 et comprenant :
une unité d'interface de processeur à processeur (35) pour échanger des groupes de signaux avec l'unité de traitement numérique de signaux et une seconde unité de traitement numérique de signaux, l'unité d'accès direct à la mémoire (32) de l'unité de traitement numérique de signaux et l'unité d'accès direct à la mémoire (32) de la seconde unité de traitement numérique de signaux (30) contrôlant le transfert des groupes de signaux entre le processeur numérique de signaux et le processeur numérique de signaux (30).
